# EUROPEAN PATENT APPLICATION

(11) **EP 4 600 631 A1**
(43) Date of publication of application: **13.08.2025**
(21) Application number: 24156868.2
(22) Date of filing: 09.02.2024
(51) Int. Cl.: G01N 1/06

(54) **METHODS FOR OPERATING A SAMPLE PREPARATION DEVICE, DEVICES FOR EXECUTING SUCH METHODS, AND INPUT/OUTPUT-ASSISTANTS FOR SAMPLE PREPARATION DEVICES**

(71) Applicant: LEICA Mikrosysteme GmbH, 1170 Wien (AT)
(72) Inventor: Katzengruber, Matthias, 1170 Wien (AT); Kirmse, Robert, 1170 Wien (AT); Winkler, Konrad, 1170 Wien (AT); Engelen, Alexandra, 1170 Wien (AT)
(74) Representative: Paustian & Partner Patentanwälte mbB

(57) **Abstract**

Computer-implemented method for operating one or more sample preparation devices,
comprising the steps:
- obtaining a plurality of operational parameters for one or more sample preparation devices ;
- configuring a processing means of a sample preparation device of the one or more sample preparation devices based on one or more of the operational parameters; and
at least one of the steps:
- positioning a sample holder of the sample preparation device configured for holding a sample, based on the plurality of operational parameters; - operating the processing means of the sample preparation device based on the plurality of operational parameters.

## Description

### Technical Field

This disclosure is related to computer-implemented methods for operating one or more sample preparation devices, to devices for executing such methods, and to computer implemented input/output assistants for operating one or more sample preparation devices.

### Background

A sample preparation process normally encompasses several meticulous stages, starting from preserving a sample in its near-natural state to embedding it in a supportive medium. The embedded sample is then finely sectioned, with the resulting slices undergoing a series of treatments - flattening, staining, and drying - to enhance visibility of tissue structures for microscopic examination. This intricate workflow demands precision and careful handling at each step to maintain sample integrity and achieve accurate diagnostic insights. Improvements are desirable.

### Summary

An object of the present disclosure is to improve working with sample preparation devices.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of this disclosure is related to a computer-implemented method for operating one or more sample preparation devices,
comprising the steps:
   - obtaining a plurality of operational parameters for one or more sample preparation devices ;
   - configuring a processing means of a sample preparation device of the one or more sample preparation devices based on one or more of the operational parameters; and
at least one of the steps:
   - positioning a sample holder of the sample preparation device configured for holding a sample, based on the plurality of operational parameters;
   - operating the processing means of the sample preparation device based on the plurality of operational parameters.

A sample can be any piece of material or of different materials that can be microscopely analyzed. A sample can include biological tissues from various organs, useful in diagnosing diseases and conducting research, as well as plant materials for studying plant anatomy. Animal tissues are often prepared for scientific studies, and human biopsy samples are crucial in identifying conditions like cancer. In materials science, various substances can be sliced in thin layers, such as polymers, for microstructural analysis. Cryomicrotomes are used for rapid pathological examination of frozen sections during surgeries. Additionally, cultured cells and hard tissues like bones can also be sliced. The intended thickness of a slice can vary from millimeters to a few micrometers.

Sample preparation devices are integral to laboratory analyses, tailored to ensure samples are in the ideal state for accurate examination. These include microtomes for slicing tissues, centrifuges for separating components by density, homogenizers for creating uniform mixtures, sonicators for disrupting cells, lyophilizers for drying samples, pipettes and automated liquid handling systems for precise volume transfers, solid phase extraction systems for isolating specific compounds, and rotary evaporators for solvent removal. Each device addresses different preparation needs, from cellular disruption to solvent extraction, playing a critical role in the precision and reliability of scientific research and diagnostic testing. In particular a sample preparation devices can be:
- a cutting device;
- a sectioning device;
- a freezing device;
- a drying device; or
- a tissue preparation device.

A processing means of a sample preparation device can refer to one or more mechanisms and technologies employed to prepare samples, e.g. for analytical or diagnostic purposes. A processing means performs a function of a sample preparation device. A processing means for a microtome can be a blade or a blade comprised on a blade holder. A processing means for a centrifugation device relates to a means used to spin a sample at high speeds. A processing means for a homogenization device refers to a means in order to break down samples to a uniform composition, e.g. a rotor-stator-homogenizer, a French press, and/or a sonicator for ultrasonic-based homogenization. A processing device for a freezing device may relate to a cooling means and/or vacuum pressure to remove water in order to preserve a sample. A processing means of a solid-phase-extraction device may relate to a solid matrix to adsorb certain compounds from a liquid sample, allowing for a purification or a concentration of specific analytes. A processing means for a solvent evaporator may comprise a rotary evaporator to remove solvents from a sample.

A sample holder, also known as a chuck or specimen holder, can be used to securely position a sample for slicing. A sample holder can be designed to firmly hold the sample in the correct orientation, allowing for precise and consistent slices. A sample holder can be adjustable, enabling alignment of the sample with the cutting blade to achieve the desired sectioning angle and thickness. Such an adjustment can be configurable independent of a first and a second movement, e.g. by a manual slider. A sample holder can comprise temperature control features, e.g. in cryomicrotomes, for maintaining low temperatures.

Positioning a sample holder and operating a processing means based on obtained operational parameters can improve the quality of the received processed sample and shorten a preparation time. In particular, the factor of human experience (high trained operators) and/or human-induced disturbances in preparing one or more samples can be drastically reduced.

An embodiment of the first aspect of this disclosure is related to a computer-implemented method for operating one or more sample preparation devices, wherein the plurality of operational parameters comprises one or more parameters related to the sample, in particular:
- a material of the sample; - an intended temperature of the sample;
- an intended moisture of the sample;
- a form of the sample; - a part of the sample to be processed;
- a processing workflow of the sample.

Based this information further information can be considered to facilitate the sample preparation process. E.g. based on a material of a sample, a temperature for the processing means may be automatically selected or a plurality of temperatures may be offered a user to select from. Based on workflow information a plurality of sample preparation devices maybe selected or reserved for usage in order to prepare the sample. This information may be provided to a user in order to guide a user through a process which is suitable for the sample preparation. This process may involve a sequence of preparation steps by different sample preparation devices. One or more obtained or determined operational parameter can serve for the whole sequence, i.e. for the whole sample preparation device.

An embodiment of the first aspect of this disclosure is related to a computer-implemented method for operating one or more sample preparation devices, wherein the operational parameters comprise one or more parameters related to a processing means of a device for sample preparation.

An operational parameter related to the processing means can also be related to a sample. For example, an intended temperature for a sample can also be used for the processing means.

In case the device is a microtome, one or more parameters can be related to a blade of the cutting device, in particular:
- a size of the blade;
- an angle in which the blade cuts the sample;
- a number of segments of the blade;
- a number of uses of the blade;
- a number of a segment to be used for a cut.

On the other hand an operational parameter can also be obtained automatically from a device for sample preparation and provided to another device for sample preparation. For example, a temperature of a sample might be measured at the end of a sample preparation process of a first sample preparation device and provided as input parameter for a second sample preparation device. In general, one or more of the operational parameters can be obtained from a human system interface and/or a network.

An embodiment of the first aspect of this disclosure is related to a computer-implemented method for operating one or more sample preparation devices, comprising the step:
- aligning the processing means, in particular a blade of a microtome, to a side of the sample based on one or more of the operational parameters.

An aligning can be executed by actuators, e.g. servo motors, of the device for sample preparation. Aligning a processing means of a sample preparation device to a specific sample can enhance accuracy, efficiency, and reproducibility in analytical and diagnostic processes. An alignment can minimize exposure to hazardous materials and/or light. Additionally, devices capable of adjusting to various sample types, e.g. depending on an operational parameter related to a sample type, may offer enhanced flexibility.

An embodiment of the first aspect of this disclosure is related to a computer-implemented method for operating one or more sample preparation devices, comprising the step:
- adjusting the device to a default configuration.

A default configuration can be a set of states that a sample preparations means adjusts before an operation can begin. A default configuration of a sample preparation means in a device may refer to a set of standardized settings or procedures that are pre-determined by a manufacturer or a user. This default configuration can be commanded and adjusted automatically. A default configuration may be designed to provide a user with a starting point for sample preparation, ensuring basic operational efficiency A default configuration can in consider any obtained operational parameters. For example, a default configuration of a freezing device, can consider a material of a sample and adapts or selects a default configuration for freezing the specific sample.

A default configuration for a microtome can comprise a standard blade type and a thickness setting (e.g., 5 micrometers) suitable for general tissue sectioning. A default configuration for a centrifuge can comprise a pre-set speed and a duration for a common centrifugation, and if a material of a sample is known a default configuration can be selected with parameters suitable for the specific sample type. A default configuration for a homogenizer can comprise a pre-defined intensity setting, in particular for a sample type specified as an operational parameter. Information about a default configuration can be obtained via a human system interface and/or a network.

A default configuration may serve as a reliable baseline, ensuring that users can achieve consistent results even with minimal prior experience or specific knowledge about the device. Advanced users may arrive efficiently at a specific configuration by adapting a default configuration.

An embodiment of the first aspect of this disclosure is related to a computer-implemented method for operating one or more sample preparation devices, comprising the steps:
- obtaining adjustment information about an adjustment feature of the sample and/or about an adjustment feature of the processing means;
- adjusting the sample and the processing means on the basis of the adjustment information.

An adjustment may in particular be important for devices, such as microtomes, that are used for precise positional processing. Based on a performed adjustment a further automatic alignment can be commanded. A successfully performed adjustment maybe registered and used as a required step for further steps, such as an automatic alignment or an automatic processing. In this way a secure processing can be assured.

An embodiment of the first aspect of this disclosure is related to a computer-implemented method for operating one or more sample preparation devices, wherein the sample holder is adjusted based on a parameter comprising information about a side of the sample that should be processed.

This parameter can be a size of the respective side to be processed. It can also be a corner or an adjustment mark.

An embodiment of the first aspect of this disclosure is related to a computer-implemented method for operating one or more sample preparation devices, wherein the processing means is positioned based on a parameter comprising information about a side of the sample that should be processed.

A side of a sample that should be processed can in particular be called "blockface". This can be in particular a trimmed part of a sample. Size information of a blockface can be part of the set of initially obtained operational parameters. A side to be processed can also be obtained from a user interface or a device preceding the current device in a workflow.

An embodiment of the first aspect of this disclosure is related to a computer-implemented method for operating one or more sample preparation devices, wherein information for adjustment and/or alignment of the processing means and/or the sample is obtained via a human user interface and/or via a network interface.

Information can be obtained and/or provided via an HSI and/or a network. This enables a user to remotely operate one or more sample preparation devices.

An embodiment of the first aspect of this disclosure is related to a computer-implemented method for operating one or more sample preparation devices, comprising the step:
- controlling a processing of a sample in the sample holder in the device.

This can be done by commanding one or more actuators of a device for sample preparation. Furthermore, one or more states of a device and/or a sample can be measured during a processing. Information about one or more states can be used for a decision when a processing has to be adapted and/or when a processing can be finished. Furthermore, information about the processing can be provided to a user interface. This gives a user, who may be a remote user, comprehensive control over a sample preparation process.

An embodiment of the first aspect of this disclosure is related to a computer-implemented method for operating one or more sample preparation devices, comprising the steps:
- generating a set of operational parameters;
- providing the set of operational parameters to a further sample preparation device.

Handing-over operational parameters can be beneficial in particular for two kinds of scenarios. In a first scenario ("consecutive processing" or "multi-stage sample preparation process") a sample is processed with a plurality of devices. Hence, each device for sample preparation/processing performs a part of a whole process. In such a scenario a hand-over can be performed in particular between two sequentially following devices. The information of the device used earlier in a process can be handed over to a device used later in the process. In this way the device that obtains the operational parameters from the earlier device can benefit from precise information that was obtained in particular during a processing with the earlier device. Of course the later device may be an earlier device for a third device to which it can pass another set of operational parameters. In general, a set of operational parameters can comprise one or more "old" operational parameters and one or more new operational parameters based on the processing with an earlier sample preparation device. This may enhance the quality of the whole procedure. In particular in a sequential workflow with a plurality of sample preparation devices, each device can provide additional operational parameters for the following device and thereby an increasing set of operational parameters can be produced.

In a second scenario ("concurrent processing"), different samples of the same type are processed with a plurality of devices of a same type. Then a device can hand-over operational parameter to one or more of the other devices. This second scenario can of course also be controlled by a central instance that passes a same set of operational parameters to all devices.

In this way, a workflow with plurality of sample preparation devices can be executed efficiently.

An embodiment of the first aspect of this disclosure is related to a computer-implemented method for operating one or more sample preparation devices, comprising the steps:
- obtaining a number of a segment of a segmented blade;
- performing a cut with the segment indicated by the obtained number.

A segment number can be obtained e.g. from a human user interface (HSI). This information can be provided even if a sample has not yet reached a microtome stage in a multi-stage sample-preparation process but is prepared by another sample preparation device. However, once the sample reaches an assigned microtome, the information can be implemented, and the predefined blade segment can be used for cutting the sample.

An embodiment of the first aspect of this disclosure is related to a computer-implemented method for operating one or more sample preparation devices, comprising the step:
- positioning the sample holder and the processing means such that a manual and/or automatic sample preparation operation can directly commence.

This may be in particular useful, if a certain part of the process is performed manually and/or requires an explicit confirmation. In such a case, a positioning, e.g. a relative positioning of a blade and sample, can be performed such that a processing, e.g. a slicing, can directly start, with the right parameters already adjusted.

An embodiment of the first aspect of this disclosure is related to a computer-implemented method for operating one or more sample preparation devices, comprising the steps:
- obtaining a confirmation of an adjusted configuration of the device via a human system interface;
- performing a processing of the sample with the processing means of the sample preparation device.

These steps can in particular be advantageous if wrong application can cause costly damages, e.g. in case of a possibly wrong application of a microtome blade.

A second aspect of this disclosure is related to a sample preparation device, configured for:
- executing a method according to one of the preceding claims; and/or
- exchanging information with a device executing a method according to one of the preceding claims.

A sample preparation device can in particular comprise a computer and be configured to execute a method according to the first aspect of this disclosure.

A third aspect of this disclosure is related to a computer-implemented technical input/output assistant (TPA),
configured for:
- receiving user-prompts; and
- controlling one or more actuators of one or more processing means of a sample preparation device , in particular a sample-preparation device according to the preceding claim, - requesting an input information related to a sample and/or to a parameter of the sample preparation device;
- controlling, on the basis of the input information, the actuators by outputting corresponding control signals such that the processing means adjusts the sample and/or the sample preparation device for processing and/or process the sample.

TPA can by a software product configured to run on a computer. A TPA can comprise functions of one or more features described in relation to a method according to the first aspect of this disclosure.

A TPA can be in particular configured to a guide a user through single or a multi-stage sample preparation process. Therefore, a TPA may be configured to provide information of how to select and prepare a sample for a certain processing stage. Furthermore, an TPA can take real-time information from a processing into account. A TPA can also be configured to display on a display of a sample preparation device or on a display remote from a sample preparation device one or more sample-related or process-related data, thereby informing a user about a state of a sample and/or a device.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a microtome system REF100_microtome_system to be operated by a method according to an embodiment of this disclosure.
Fig. 2 illustrates a flow chart of a method according to an embodiment of this disclosure.
Fig. 3 illustrates an operation mode for a method and/or a technical input/output assistant according to an embodiment of this disclosure.
Fig. 4 illustrates an operation mode for a method and/or a technical input/output assistant according to an embodiment of this disclosure.
Fig. 5 illustrates a GUI for a method and/or a technical input/output assistant according to an embodiment of this disclosure.
Fig. 6 illustrates a GUI for a method and/or a technical input/output assistant according to an embodiment of this disclosure.
Fig. 7 illustrates a GUI for a method and/or a technical input/output assistant according to an embodiment of this disclosure.
Fig. 8 illustrates a microscope system for a microscope operated by a method and/or a technical input/output assistant according to an embodiment of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

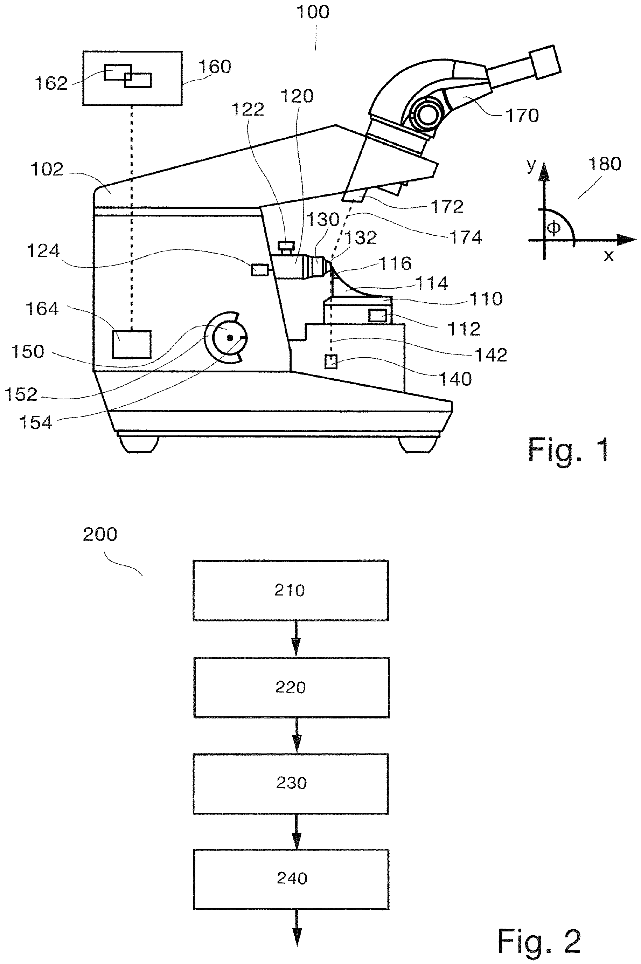

Fig. 1 illustrates a microtome system 100 to be operated by a method according to an embodiment of this disclosure. The microtome system 100 comprises a housing 102 in which components of the microtome system are arranged. The microtome 100 comprises a blade holder 110 configured to hold a blade 114. The blade holder is movable in different directions by the actuator system 112. The blade 114 comprises a blade edge 116, which performs the cut and may be made of glass or diamond.

The microtome 100 comprises a sample holder 120 that can be actuated in at least two translational and two rotational degrees-of-freedom by the actuator systems 122, 124. The sample holder 120 is configured to hold a sample 130.

The sample 130 comprises a block face 132 that is a region where a cutting operation should take place. The area of the block face and the blade can be illuminated by a light source 140 that emits the light beam 142.

A cutting operation can be controlled by a mechanical element, i.e. the rotating wheel 150, and/or by software. When rotated, the rotating wheel 150 commands the sample holder to perform a first movement in the dimension y of the reference coordinate system 180 and a second movement in the dimension x. The resulting movement has an elliptical shape such that the cutting operation is performed during a downward movement in which sample holder position within the second movement is further right on the y-axis. A cutting operation can also be controlled independent from a manual element, e.g. by two different input elements.

The microtome system 100 comprises a microscope 170, which is arranged at the housing 102 and is configured such that a user can look at (and inspect) a block face 132 of a sample 130 and the blade 114. For example, a user might inspect the cutting movement and/or the quality of the knife edge 116, in this way. The light, generated by the illumination 140 by illuminating the (physical) gap between the sample 130 (or its blockface 132) and the blade 114 (or its edge 116) is detected by the detector 172 of the microscope 170. This might require appropriate arrangement and/or orientation of the detector 172.

Also, the microscope 170 might be arranged and/or oriented such that this light gap is visible by means of the microscope 170. Therefore, the microscope 170 can be configured such that it can be repositioned with respect to the visual axis 174. The repositioning can in particular be performed along an angle φ of the coordinate system 180. The microscope 170 can be an optical microscope, a fluorescence microscope, a confocal microscope, etc. In an embodiment, the detector 172 can be external to the microscope 170 and only configured to exchange information with the microscope 170.

The microtome system 100 further comprises a display 160, on which information about a cutting process and/or indications 162 for the alignment of the blade 114 with the block face 132 of the sample 130 can be displayed to the user. The display can 160 be configured to act as a user interface to obtain information for the operation of the microscope or another device in connection with the microscope.

Through the rotary wheel 150, a user commands the first movement and the second movement as described above. This is done, e.g. by a software that transforms the positions of the rotary wheel 150 to respective positions of the first and the second movement, e.g. controlled by the actuator systems 122, 124. The actual position of the rotary wheel 150 is indicated by the marking 152. If the position marking 152 is within the marking 154, then the system is in a retreat phase.

A model of the device can be comprised by a method for operating one or more sample preparation devices. Based on the model, an operator can operate the microscope, in particular without the necessity of being in the same location, e.g. a same room, as the microscope. This allows more sensitive analyses, since a user alone might deteriorate by her/his presence a cutting result (e.g. by physical movements that may cause the microtome to move as well). All functions of the microscope can also be commanded by a software and over a network.

Fig. 2 illustrates a flow chart 200 of a method according to an embodiment of this disclosure. In this embodiment the method operates a microtome as described in relation to Fig. 1.

In a first step 210, a plurality of operational parameters for operating the microtome are obtained. Operational parameters can relate to a type of the device and comprise a model of the device, as explained above. Operational parameters can relate to the kinematical or dynamical configuration of the microtome, in particular its movable parts and its motors. Furthermore, an operational parameter can indicate if a blade holder is filled with water in order to take cut slices. Another operational parameter can relate to an activation of a pump to provide water into the blade holder or to retrieve water from the blade holder. Other operational parameter can relate to a sample, e.g. material, size, etc. These operational parameters can be provided by a user interface. Additionally or alternatively, one or more operational parameters can be obtained over a communication interface (e.g. WIFI, Bluetooth, Ethernet, and/or a 5G interface), e.g. from another device that was preparing the sample in a prior step.

In a second step 220, a processing means of the microtome is configured. Based on the obtained operational parameters of the device and of the sample, further operational parameters may be determined on the basis of these parameters by the operation method, e.g. a segment of a blade to be used for a cut. The determined operational parameters may be provided to a user interface for further confirmation. Further information about the blade and the sample may also be configured by a user over a user interface, e.g. a material of a blade, a number of segments of a blade, a number of uses of a blade, in particular if one or more of these parameters are not available as obtained operational parameters.

In a third step 230 a sample holder of the microtome is positioned based on one or more of the operational parameters. This positioning can be a position adjustment relative to the blade holder or to the blade of the microtome. Additionally or alternatively, the positioning can comprise a positioning in a default configuration, in particular such that a user can directly commence a cutting process. Before the microtome is positioned into a default configuration the parameters of the default configuration can be provided to a human system interface for confirmation by a user. An adjustment positioning and/or a positioning into a default configuration can comprise a movement of a blade holder of the microtome as well.

In a fourth step 240 the microtome is operated such that a thin slice, at a preconfigured thickness, is cut from the sample by the blade. This step can be entirely commanded by the method without any interference of a user. This may improve the extremely thin cutting results. The configuration of the microtome (operational parameters and further configurations) can be stored for later usages and/or provided to another microtome. This can facility an operation of the other microtome and increase the process quality as well.

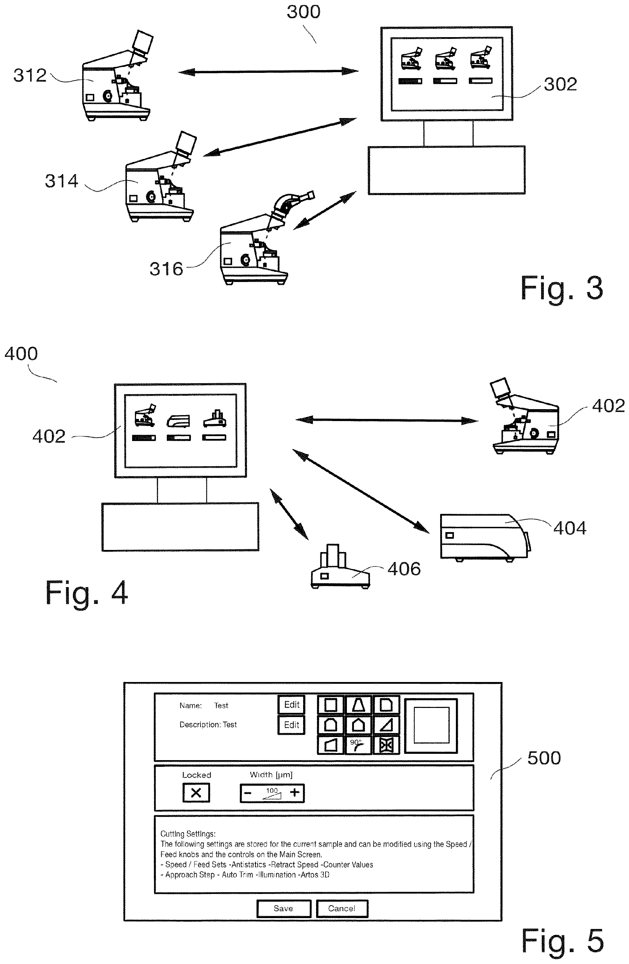

Fig. 3 illustrates an operation mode 300 for a method and/or a technical input/output assistant according to an embodiment of this disclosure. In this case a plurality of microtomes 312, 314, 316 are operated by a method for operation a sample preparation device. The microtomes 312, 314 are of the same type, which can only be operated through a software, while microtome 316 also comprises a manual microscope and can therefore be operated manually as well. The method can be executed at a computer 302 attached or comprised by one of the microtomes 312 - 316. Alternatively, the method can be executed by a central device that is connected to one or more of the microtomes 312 - 316. The parallel operation can be at least partly concurrently, or it can be sequentially. Operational and/or configurational parameters can be exchanged between the microtomes under supervision of the operational method. In this way the operational method obtains all information about the three different microtomes and the processes conducted by these devices.

Fig. 4 illustrates an operation mode 400 for a method and/or a technical input/output assistant according to an embodiment of this disclosure. In this case the method operates different device types, such as a microtome 402, a tissue processor 404, and a critical point dryer 406. In this way, different processes can be operated at the same time. Additionally or alternatively, a process with different sub procedures can be operated. For example, different samples can be prepared by a tissue processor 404, then the samples are cut by the microtome 402 and finally the samples are dried with the critical point dryer 406. Operational data of the sample can be exchanged between the devices and/or provided to all devices from the computer that runs the operation method or the technical input/output assistant 402. In this way a comprehensive process can be configured, processed, and monitored automatically and only with minimal input from a user. Detrimental user effect such as vibrations can be avoided or at least reduced.

Fig. 5 illustrates a GUI 500 for a method and/or a technical input/output assistant (TPA) according to an embodiment of this disclosure. The GUI shows a user interaction related to a first step of a method for operating one or more sample preparation devices and/or a TPA. In the example the method operates a microtome as described in relation to Fig. 1. The GUI is related to a trimming of a sample. Potential trimming forms are provided as icons such that a user can easily command them. Trimming parameters can comprise a blockfaces size, a default feed, a default speed, an illumination, etc. Furthermore, based on a time measurement, the method may indicate when the sample has expired. This information can in particular be provided by another pre-processing device, e.g. a device for tissue preparation (such as device 404) can provide a starting time, once the sample has sufficient moisture. Since it is known when that the moisture evaporates in a certain time limit, it should only be sliced by the microtome within this time limit. Once the time limit is exceeded the sample can be indicated as expired.

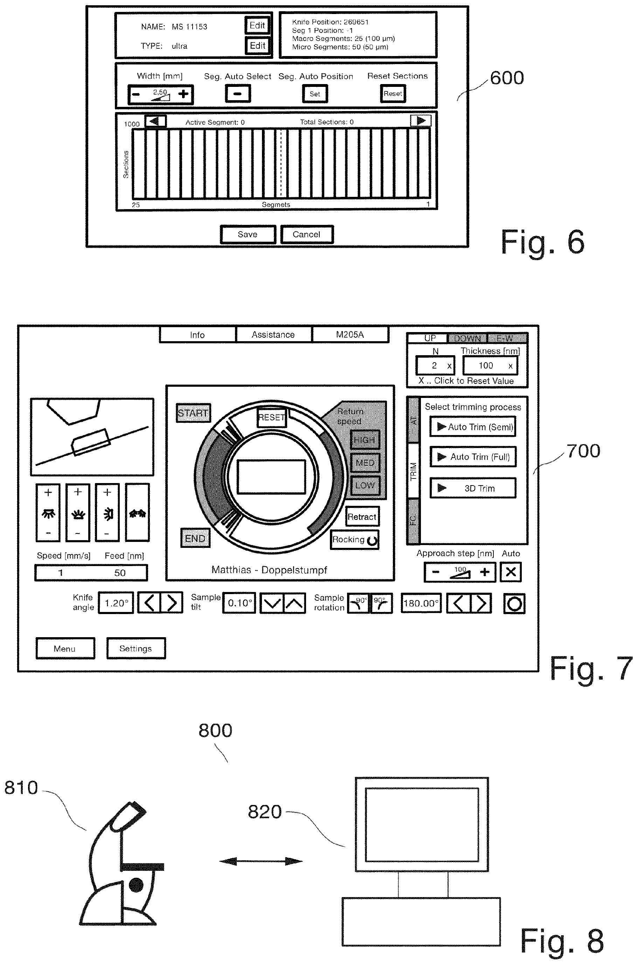

Fig. 6 illustrates a GUI 600 for a method and/or a technical input/output assistant according to an embodiment of this disclosure. The GUI is related to a configuration step, in particular to a configuration of a blade of a microtome. Different parameters can be configured, e.g. a width of a blockface, a segment of the blade to be uses. Furthermore, sensitive information is provided to a user in order to confirm a planned cutting procedure or to reset the configuration and input a new configuration.

Fig. 7 illustrates a GUI 700 for a method and/or a technical input/output assistant according to an embodiment of this disclosure. The GUI is related to a processing step, in particular to cutting of a sample by a microtome:
1. Set Stereo to 1x Mag;
2. Bring Stereo into default angle for select knife select;
3. Move microscope that blockface is in inner top quarter;
4. Bring knife into field of view field;
5. Rotate blockface roughly;
6. Optimize illumination;
7. Align right side of knife and blockface;
8. Confirm alignment Confirm;
   Once alignment is confirmed:
   a) Software measures block face dimension;
   b) Moves knife to a default alignment position;
9. Change Stereo to right FOV (e.g. 2x...3x)
10. Run auto alignment / alignment assistant;
11. Change window to cutting window (top left view);
   a. Software suggests a cut position without marks; alt. warn if knife is worn out / marks in block face reached;
   b. Software sets cutting window and cutting speed;
   c. Counters?
12. User Checks cut parameters;
13. Start final approach.

Some embodiments relate to a microscope comprising a system as described in connection with one or more of the Figs. 1 to 7. Alternatively, a microscope may be part of or connected to a system as described in connection with one or more of the Figs. 1 to 7. Fig. 8 shows a schematic illustration of a system 800 configured to perform a method described herein. The system 800 comprises a microscope 810 and a computer system 820. The microscope 810 is configured to take images and is connected to the computer system 820. The computer system 820 is configured to execute at least a part of a method described herein. The computer system 820 may be configured to execute a machine learning algorithm. The computer system 820 and microscope 810 may be separate entities but can also be integrated together in one common housing. The computer system 820 may be part of a central processing system of the microscope 810 and/or the computer system 820 may be part of a subcomponent of the microscope 810, such as a sensor, an actor, a camera, or an illumination unit, etc. of the microscope 810.

The computer system 820 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 820 may comprise any circuit or combination of circuits. In one embodiment, the computer system 820 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 820 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 820 may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system 820 may also include a display device, one or more speakers, and a keyboard and/or controller, which can include a mouse, trackball, touch screen, voice-recognition device, or any other device that permits a system user to input information into and receive information from the computer system 820.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus."

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: microtome system
- 102: housing
- 110: blade holder
- 112: actuator system
- 114: blade
- 116: blade edge
- 120: sample holder
- 122: actuator system
- 124: actuator system
- 130: sample
- 132: block face
- 140: light source
- 142: light beam
- 150: rotating wheel
- 152: wheel position marking
- 160: display
- 162: displayed information
- 170: microscope
- 172: detector
- 174: visual axis
- 180: coordinate system
- 200: method steps
- 210: first method step
- 220: second method step
- 230: third method step
- 240: fourth method step
- 300: parallel operation
- 302: computer
- 312: microtome
- 314: microtome
- 316: microtome
- 400: workflow operation
- 402: computer
- 404: tissue processor
- 406: critical point dryer
- 500: GUI
- 600: GUI
- 700: GUI
- 800: microscope system
- 810: microscope
- 820: computer system

## Claims

1. A computer-implemented method (100) for operating one or more sample preparation devices,
comprising the steps:
- obtaining (210) a plurality of operational parameters for one or more sample preparation devices (100);
- configuring (320) a processing means of a sample preparation device of the one or more sample preparation devices based on one or more of the operational parameters; and
at least one of the steps:
- positioning (230) a sample holder of the sample preparation device configured for holding a sample, based on the plurality of operational parameters;
- operating (240) the processing means of the sample preparation device based on the plurality of operational parameters.

2. The method according to the preceding claim,
wherein the plurality of operational parameters comprises one or more parameters related to the sample, in particular:
- a material of the sample;
- an intended temperature of the sample;
- an intended moisture of the sample;
- a form of the sample;
- a part of the sample to be processed;
- a processing workflow of the sample.

3. The method according to one of the preceding claims,
wherein the operational parameters comprise one or more parameters related to a processing means (114) of a device for sample preparation (100).

4. The method according to one of the preceding claims,
comprising the step:
- aligning the processing means (114), in particular a blade of a microtome, to a side of the sample (132) based on one or more of the operational parameters.

5. The method according to one of the preceding claims,
comprising the step:
- adjusting the device (100) to a default configuration.

6. The method according to one of the preceding claims,
comprising the steps:
- obtaining adjustment information about an adjustment feature of the sample and/or about an adjustment feature of the processing means (114);
- adjusting the sample (132) and the processing means on the basis of the adjustment information.

7. The method according to one of the preceding claims,
wherein the sample holder (120) is adjusted based on a parameter comprising information about a side of the sample that should be processed.

8. The method according to one of the preceding claims,
wherein the processing means (114) is positioned based on a parameter comprising information about a side of the sample (132) that should be processed.

9. The method according to one of the preceding six claims,
wherein information for adjustment and/or alignment of the processing means (114) and/or the sample (132) is obtained via a human user interface (160) and/or via a network interface.

10. The method according to one of the preceding claims,
comprising the step:
- controlling a processing of a sample (132) in the sample holder (120) in the device (100).

11. The method according to the preceding claim,
comprising the steps:
- generating a set of operational parameters;
- providing the set of operational parameters to a further sample preparation device (100).

12. The method according to one of the preceding claims,
wherein the device is a cutting device, in particular a microtome; and comprising the steps:
- obtaining a number of a segment of a segmented blade (116);
- performing a cut with the segment indicated by the obtained number.

13. The method according to one of the preceding claims,
comprising the steps:
- positioning the sample holder (120) and the processing means (114) such that a manual and/or automatic sample preparation operation can directly commence.

14. The method according to one of the preceding claims,
comprising the steps:
- obtaining a confirmation of an adjusted configuration of the device (100) via a human system interface (160);
- performing a processing of the sample (132) with the processing means (114) of the sample preparation device.

15. A sample preparation device (1100),
configured for:
- executing a method according to one of the preceding claims; and/or
- exchanging information with a device executing a method according to one of the preceding claims.

16. A computer-implemented technical input/output assistant, TPA, configured for:
- receiving user-prompts; and
- controlling one or more actuators (112, 124, 140) of one or more processing means (114) of a sample preparation device (100), in particular a sample-preparation device according to the preceding claim,
- requesting an input information related to a sample (132) and/or to a parameter of the sample preparation device;
- controlling, on the basis of the input information, the actuators by outputting corresponding control signals such that the processing means adjusts the sample and/or the sample preparation device for processing and/or process the sample.
